# EUROPEAN PATENT APPLICATION

(11) **EP 0 719 065 A1**
(43) Date of publication of application: **26.06.1996**
(21) Application number: 94480178.6
(22) Date of filing: 20.12.1994
(51) Int. Cl.: H04Q 11/04, H04L 12/56

(54) **Multipurpose packet switching node for a data communication network**

(71) Applicant: International Business Machines Corporation, Armonk, N.Y. 10504 (US)
(72) Inventor: Galand, Claude, F-06800 Cagnes Sur Mer (FR); Lebizay, Gérald, F-06140 Vence (FR); Louis, Philippe, F-06200 Nice (FR); Jacquart, Xavier, F-06140 Vence (FR); Leboudec, Jean-Yves, CH-1008 Jouxtens-Mezery (CH); Poiraud, Clément, F-06800 Cagnes Sur Mer (CH); Georges, Eric Saint, F-06610 La Gaude (FR); Suffern, Edward, Chapel Hill, NC 27514 (FR); Spagnol, Victor, F-06800 Cagnes Sur Mer (FR); Truong, Hong Linh, CH-8805 Richterswil (CH)
(74) Representative: Therias, Philippe

(57) **Abstract**

Multipurpose data communication network node made to enable interconnecting both ATM and Variable Length (VL) input/output trunks with all combinations of node input versus output trunks connections made possible.

The network node includes ATM/VL Receive Adapters and ATM/VL Transmit Adapters, interconnected via a Switching device (44) operating on ATM like packets (i. e. ATM cells) only. The receive adapter includes means (41, 43) for deriving ATM cells from VL traffic possibly including ATM packets and provided over an input VL trunk (45, 46) and means for deriving ATM cells from ATM packets provided on input ATM trunk. The transmit adapter, includes means (47, 48) for reconstructing VL traffic to be fed onto an output VL trunk, and means (49, 50) for reconstructing ATM traffic to be fed onto an output ATM trunk ; both means (47, 48) and (49, 50) being fed with ATM cells irrespective of the traffic origin, being it from VL or ATM trunks.

## Description

### Field of the Invention

This invention deals with data transmission network nodes, and more particularly with network nodes made to vehiculate both Asynchronous Transfer Mode (ATM) packets and Variable Length (VL) packets over both ATM or VL links (or trunks), in an optimized way.

### Background of the Invention

Modern digital networks are made to operate in a multimedia environment for transporting different types of data including pure data such as files of alphanumeric characters, as well as voice, image, video signals, etc... The network should, naturally ensure compliance with a number of requirements specific to each kind of these traffics.

For instance, one may notice that the information provided by various users can be divided into different types. These include non-real-time information, i. e. information that can be delivered to the corresponding end-user with minor time constrain restrictions ; and real-time information that must be delivered to the corresponding end-user with a predefined limited-delay restriction. If the latter information is not delivered to the end-user within said time delay, it should simply be discarded. This problem has been taken care of, to some extent, by providing techniques such as interpolation/extrapolation techniques, in a so-called data packet transmission environment.

While these techniques do provide solutions to overcome the loss of a limited number of data it does not support discarding too many at a time.

On the other hand, the non-real-time information may recover from fairly large and variable time delays from input to destination, but any loss of data may become dramatic, eventhough, here also, techniques have been developed to overcome this problem. These techniques include, generally speaking, data retransmission, upon specific request.

As one may understand from the following description, retransmission is not an optimal solution, as it may impact on the whole network operation, for instance when the corresponding data are intended to control the network itself.

On the other hand, one should remember that different techniques have been developed, such as packet switching techniques, whereby the digitized data are arranged into the so-called bit packets, and circuit switching techniques. The packets may either be of fixed length e. g. Asynchronous Transfer Mode (ATM packets) or be of variable length (VL) nature.

The basic advantage of packet switching techniques over circuit switching techniques, is to allow a statistical multiplexing of the different types of data, over a link which optimizes the transmission bandwidth. The drawback of packet switching techniques, compared to circuit switching techniques, is that it introduces jitter and delay, which, as already noted, may be detrimental for the transmission of isosynchronous data, like video or voice. This is why methods have been proposed to control a network in such a way that delays and jitters are bounded for every new connection that is set-up accross a packet switching network.

A basic data transmission network includes so-called traffic nodes interconnected by transmission links or trunks, and through which the data from end-users are vehiculated in a dynamic and optimal manner. To that end, the network control architecture is a distributed one, which means that each switching node is controlled by a Control Point. All Control Points are interconnected via a Control Point Spanning Tree (CPST) which provides an efficient means for multicasting control messages between the Control Points. When a Control Point wants to broadcast a message to other Control Points in the network it sends this message to the predefined CPST switching address, and the network (Node) architecture provides the means to route this message on the lines of the Control Point spaning tree, and only on these lines. This architecture also provides the means to initialize the tree address on each switching node, and to automatically reconfigure the tree in case of any line or switching node failure. Therefore, needless to mention how vital to the overall communication network optimal operation, any control message proper and fast delivery may be.

Such a spanning tree operation has been fully developped in the copending European Patent Application number 94480048.1 filed on 25 May 1994 with title "A Data Communication Network and Method for Operating said Network". As therein fully developed, proper control message delivery is vital not only for any spanning tree operation under normal conditions, but also for spanning tree fast reconfiguration in case of any link or node failure, as well as for dynamically optimizing the network operation in case of a new link being set on. To that end, each Control Point includes a copy of the topology data base that contains information about the network. It includes the network physical configuration and the network line charactics and statuses. For every line n, in the network, the maximum delay that can be introduced in a packet with a specified priority, and the level of bandwidth reservation of this line are defined and recorded in the topology data base. This information is distributed to other Control Points via topology uptate messages sent over the Control Point Spanning Tree whenever it presents significant changes.

Accordingly, one may realize that a packet switching network may be very complex in architecture and operation. The optimization of such a global communication network requires that each network node be designed to be able to interconnect all kinds of trunks without distinction, while also being capable of discriminating and processing accordingly network control traffic and user's traffics.

### Summary of the Invention

Accordingly, this invention is meant to provide a multipurpose network node system organization made to interconnect variable length trunks and ATM trunks in all possible combinations.

### Objects of the Invention

One object of this invention is to provide a multipurpose packet switching node organization made to enable interconnecting ATM and/or VL node input trunks to ATM and/or VL node output trunks with any possible combinations of input versus output connections.

Another object of this invention is to provide a multipurpose packet switching node organization made to enable interconnecting ATM and/or VL node input trunks to ATM and/or VL node output trunks with any possible combinations of input versus output connections, by interconnecting receive adapter(s) to transmit adapter(s) in any possible combinations, through a switching device designed for transferring ATM packets organized into so-called ATM cells.

Still another object of the invention is to provide a multipurpose packet switching node organization made to enable interconnecting ATM and/or VL node input trunks to ATM and/or VL node output trunks with any possible combinations of input versus output connections, by interconnecting receive adapter(s) to transmit adapter(s) in any possible combinations, through a switching device designed for transferring so-called ATM cells, wherein said receive and/or transmit adapters include means for segmenting VL packets into ATM-like packets.

Still another object of the invention is to provide a multipurpose packet switching node organization made to enable interconnecting ATM and/or VL node input trunks to ATM and/or VL node output trunks with any possible combinations of input versus output connections, by interconnecting receive adapter(s) to transmit adapter(s) in any possible combinations, with said node further including network control means for detecting and processing network control packets.

These and other objects, characteristics and advantages of this invention will become apparent from a consideration of the following detailed description given with reference to the accompanying drawings, which specify and show a preferred embodiment of the invention.

### Brief Description of the Drawings

Figure 1 represents a basic data communication network.
Figure 2 represents a more complex data communication network for which the invention node suits particularly.
Figure 3 is a simplified block diagram of the invention node.
Figure 4 is a detailed block diagram illustrating the node architecture.
Figures 5 and 6 are made to illustrated traffic processing within the invention node.
Figures 7 through 10 are flow charts illustrating the node operations.
FIG.11 shows a physical implementation of the R_SIA boxes 43 or 46 of FIG.4

### Detailed Description of a Preferred Embodiment of the Invention

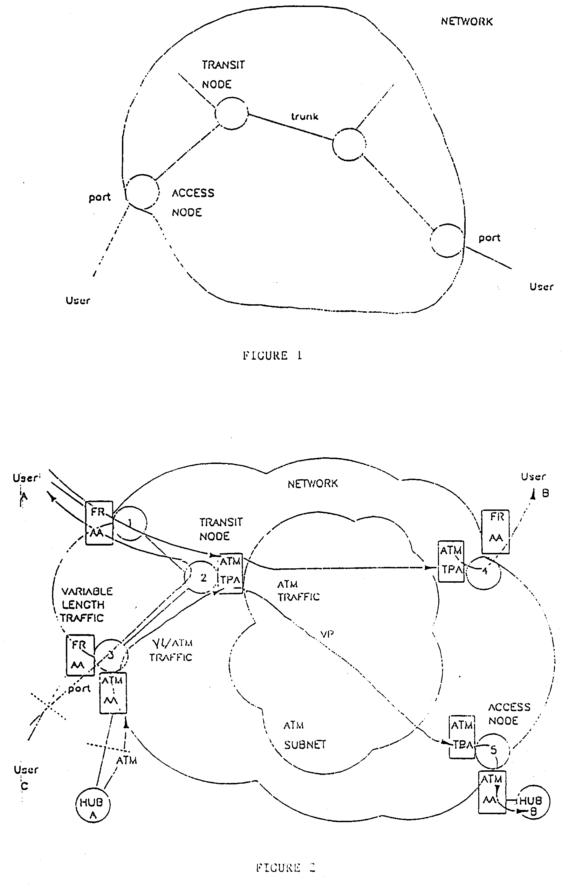

Represented in figure 1 is an already available private network based on leased lines including T1's and T3's lines, which in the considered terminology are both called trunks, with said trunks linking together access and/or transit nodes. The users get access to the network through ports located in the access nodes. The users's data are processed by an access agent running in the port. The function of the access agent are twofold : first interpret the user's protocol, and then set the path and route packets through the network. The latter task is accomplished through the setting of a so-called header, attached to the user provided data, as shall be explained in the following description.

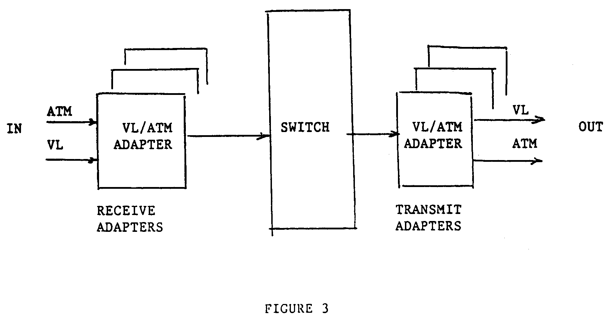

However, due to the fast evolution of carrier's offering and user's desiderata, the above considered private network should evolve as shown in figure 2, which, in addition to leased lines, would support Frame Relay and Asynchronous Transfer Mode (ATM) sub-networks. This network offers the possibility of carrying native ATM traffic as well as Variable Length (VL) traffic, which VL traffic may include both user's traffic and control traffic.

As already mentioned, a fundamental difference between both VL traffics, is that user's traffic needs only be vehiculated along a given network path from a source end user to a target end user without affecting the network. While control traffic should be addressed to specific nodes, be decoded therein and control the very network architecture and operation.

On the other hand, one should also notice that the complex network of figure 2 may include carrier's sub-networks and therefore fully comply with corresponding requirements. And, in addition variable length traffic may also include ATM type of traffic.

An ATM packet is usually organized into a packet including a 48-byte long payload and a 5 bytes long header for node to node connection and checking. A variable length packet is slightly more complex, and so does'its routing operation both inter-network nodes and intra-network node communications.

In summary one may say that the user data are provided to the network in a variable number of bytes, upon entering the access node through a given port, each variable length block of user's data is provided with an inter-node header made for routing the data between the consecutive network nodes and down to the final user. The contents of such a header depends on the type of routing selected by the network designer. Conventional routings include for instance Automatic Network Routing (ANR) label swapping type of routing, Tree routing, etc... Although the node conception according to present invention may apply to most of these inter-node protocols, the description of a best mode of implementation of this invention shall be based on label swapping. Therefore let's describe the corresponding inter-node header. This header includes two one byte long control blocs (CB1 and CB2), one two bytes long label L1, and a validity control block, i.e. Linear Redundancy Checking block (LRC). This header, appended with the user's data gives what we shall designate by the expression VL packet or VL payload.

In summary, any network node may receive traffics including both Variable Length packets and/or ATM packets over VL and/or ATM trunks and be able to switch such traffics toward both VL and ATM output trunks, with all input versus output combinations made possible. The following description shall address one way of communication within the network node, but it should be clear that the other way of communication within the node (making the node operable in full duplex) derives immediately from the following description. In order to do so this invention provides for an optimized multipurpose network node. The overall node architecture is schematically represented in figure 3. The network node is made to be connected to both ATM and Variable Lengh (VL) trunks, through a set of receive adapters on one side and a set of transmit adapters on the other side. Both sets of adapters are interconnected in all possible combinations through a so-called ATM Switch made to process ATM shaped packets only (herein simply refered to as ATM cells). Since the switch is made to operate on ATM cells, the variable length traffic is segmented into ATM cells for switching purposes, while the ATM traffic is switched almost directly. Both are however arranged into a format including in addition to a conventional ATM like packet (ATM header (5 bytes) and payload (48 bytes)), the following information :
- a switch routing header (SRH) to route the ATM cells through the switch stages (e. g. : 3 bytes) ;
- a control field (CNTL) for adapter to adapter protocol and switch microcontroller (e. g. 1 byte) ;
- a CRC (e. g. : (1 byte) field appended to the payload data and made to protect the ATM cell, proper, between switch receive and transmit interfaces.

Such an encapsulated ATM packet shall be referred to as ATM cell.

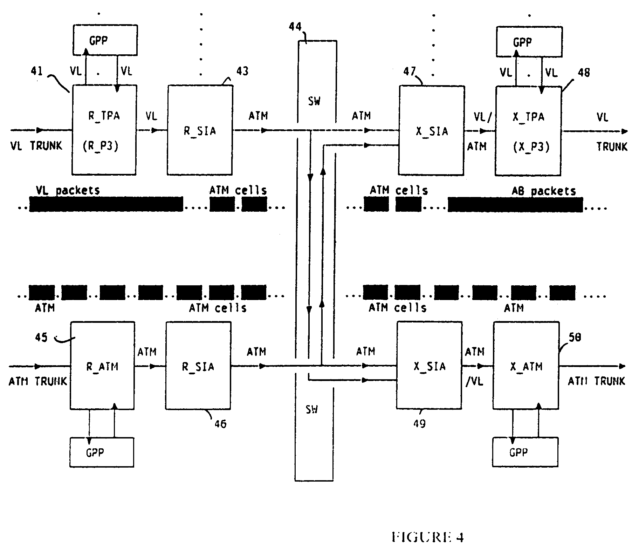

Represented in figure 4 is a detailed block diagram of a node made according to the teaching of this invention. Each input VL trunk is connected to a receive adapter through a receive trunk/port adapter (R_TPA) 41. The R_TPA (41) is connected on one side to a general purpose processor GPP (42) assigned with control operations, and on the other side, to a receive switch interface adapter R_SIA (43). Also, connected to any input ATM trunk are a receive trunk/port adapter R_ATM (45), the output of which is connected to a receive switch interface adapter R_SIA (46). Both R_SIA's are connected to the switch device SW (44).

On the switch output side, in order to drive a variable length mode output trunk, a transmit switch interface adapter X_SIA (47) drives a transmit trunk/port adapter X_TPA (48) also attached to a general purpose processor (GPP) to which network control operations are assigned. While, for driving a node output ATM trunk, the node is provided with transmit switch interface adapter X_SIA (49) driving a transmit trunk/port adapter ATM, X_ATM (50), also provided with a general purpose processor for network control operations. Obviously, those general purpose controllers might be combined into a single processor, powerful enough to do the job.

What is particularly noticeable with the above node architecture is that it enables any possible combination of node input versus output trunks to be operated and therefore suits perfectly for a complex network as the one represented in figure 2. Naturally, any node may also be connected to one or several trunks of any kind.

In operation, the receive trunk/port adapter (R_TPA) 41 receives VL packets or ATM packets and performs the following operations : LRC or HEC checking, traffic discrimination and routing. The first function is meant to check integrity of the received packet header through conventional LRC/HEC processing. In other words, for each incoming VL packet the LRC/HEC of the packet header is computed and compared with the LRC/HEC carried by the header. In case of mismatch, the packet is discarded.

Now as far as routing is concerned, in the best mode of implementation of the invention as described herein, routing is essentially based on label swapping in the packet header, each label designating a node output, i.e. next node to be oriented to, through a prestored table look-up. For more information on this feature, one may refer to the European Application No 94480097.8 filed on 7 October 1994, with title "Method for Operating Traffic Congestion Control in a Data Communication Network and System for Implementing said Method", as well as on the following description.

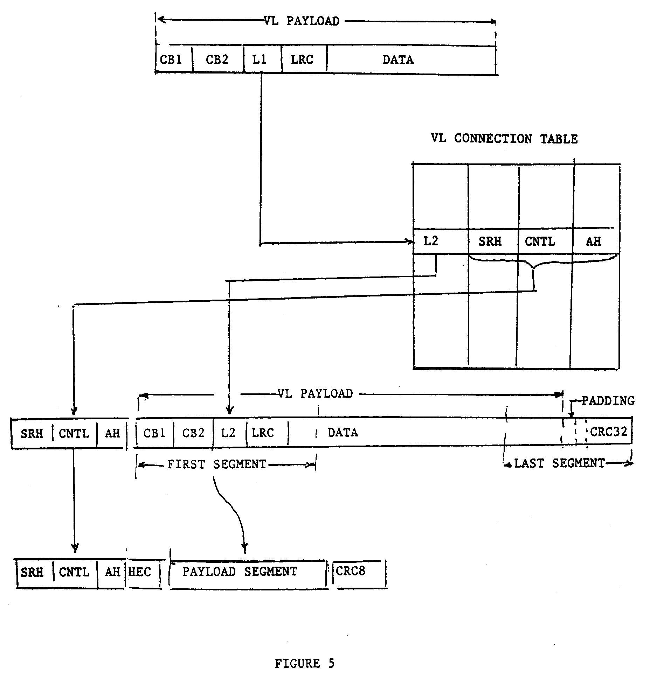

As far as this invention is concerned, let's just note that the variable length packet carries the incoming link reference (e.g. label L1). This reference is used to address a connection table prestored in the node interface processor. Said table look-up operation first returns an outgoing link reference (e.g. L2) which is used to replace L1 in the packet header, while LRC is recomputed and replaced. The label operation is designated as a label swapping. These table look-up operations are illustrated in figure 5.

Routing of VL packets involves a preprocessing including, in addition to label swapping, a mapping operation made to provide an "ATM like header" (AH) to be attached to the VL packet (i. encapsulate the VL packet). Said AH shall be used to generate a header checking word (HEC) derived from a predefined function of AH. The HEC is appended to AH thereby providing a so-called ATM header.

The values in the connection table have been initialized at the connection set up time. The SHR has been derived from a specific field in a connection set-up message, and the label L2 has been selected by the receive adapter of the next node of the route. The label L2 is then used to build the ATM header by mapping the L2 bits into the most significant bits of the Virtual Path/Virtual Channel used on the switch. The switch routing header SRH and the ATM header are passed to the switch interface R_SIA along with the VL packet. In other words, they are both used to "encapsulate" VL packets, while ATM packets are "encapsulated" with the switch routing header.

The routing of packets using the tree routing mode is very similar to the routing of packets using label swap routing mode. In this case, the connection table look-up operation provides a switch routing header (SRH) and an ATM header. The values in the connection table have been initialized by the tree management function. The SRH is used to address a multicast table in the switch. Again, switch routing header and ATM header are passed to the switch routing interface R_SIA along with the packet, and the bit 1 of control byte is set to zero.

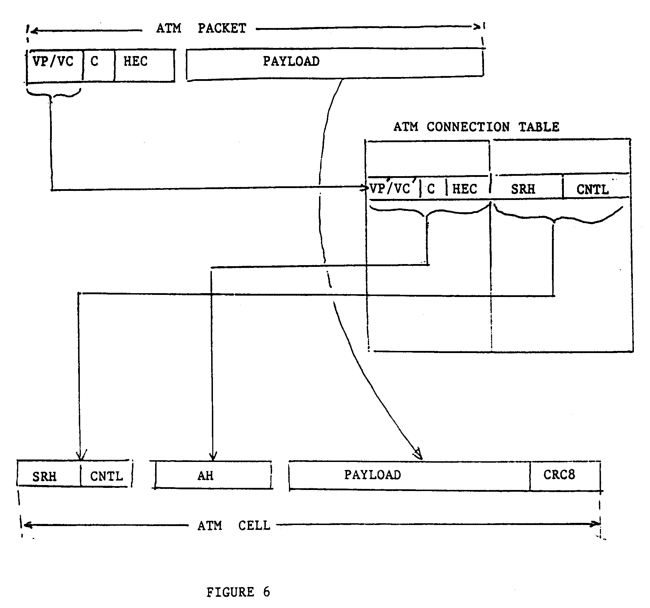

An ATM vehiculated either on an ATM trunk or on a VL trunk, shall normally include: a 5 bytes long header and a 48 bytes long payload (i.e; user's data). The header AH includes the VP/VC (4 bytes including 4 control bits) and the 1 byte long HEC. The VP/VC is used to address an ATM connection table, which table has been initialized and is updated (if required), by the General Purpose Processor (GPP) attached to the R_TPA (41) or R_ATM (45). The ATM connection table addressing returns new values for VP/VC field (with its control) and HEC field. The table look-up operation also provides switch routing header (SRH) and control (CNTL) data. These information shall be attached to the ATM header of the considered packet. All is still needed to get an ATM cell to be fed to the Node Switching Device SW (44), is the one byte long CRC (i.e: CRC-8) to be computed in the R_SIA (43, 46) and appended to said cell. These operations are illustrated in figure 6.

As per network control packets, they are discriminated from data packets, as follows:
- on VL trunks, the control bytes CB1 and CB2 are used to indicate the nature of the packet and are also used to address various control functions (connection set-up, bandwidth management, label management, topology update, directory queries, etc ....);
- on ATM trunks, the control packets are segmented into ATM packets which are sequentially transmitted on a reserved Virtual Channel (VC) for each Virtual Path (VP)
Control packets are processed the same way as data packets. In short, the R_TPA processor implements the basic routing operations and generates an ATM header to be used by the switch interface to route the cells. The only difference between the processing of control packets and data packets is the way the ATM label is selected.

Let's now consider the Receive Switch Interface Adapter (R_SIA) which may operate either in VL mode when it is connected to a R_TPA (41), or in ATM mode when it is connected to an R_ATM adapter (45).

In VL mode, the switch interface R_SIA (43) receives VL packets (which may include ATM traffic) already considered above. As per a VL packet, it has already been provided with the VL payload along with the switch routing header SRH, the control field content CNTL, and the AH field content, from the R_TPA adapter. Basic functions shall then be operated : a so-called "segmentation" function which breaks VL payload into ATM like payloads, a cell HEC generation and a CRC generation.

Let's start with segmentation. The switch interface (R_SIA) segments the VL packet payload into 48 bytes long data units, builds a 53 bytes long packet for each 48 bytes of data by concatenation of the ATM like header, and passes each ATM shaped cell to the switch, along with the switch routing header and the control byte. A specific field is set for the last cell (identified by one bit in the header). Said last cell shall include, in addition to the remaining VL payload bits (last segment), padding bits, number of payload bytes, and a 4-bytes long CRC (i.e. CRC-32) covering the whole packet payload and padding. The CRC is generated by the interface and is appended to the last cell.

Now, as far as HEC generation is concerned, it is generated by the interface, for each ATM cell, according to ATM specification.

In other words, the HEC is a predefined function of AH. And, finally, the interface computes a one byte long CRC protecting all the switch cells, and appends it to the considered last cell.

In ATM mode, the switch interface (46) receives ATM cells along with a switch routing header SRH and a control byte (CNTL) from the R_ATM adapter (45). A one byte long cell CRC is then generated and appended to the cell.

Now, the ATM shaped cells, whatever be their origin (be it VL traffic or ATM traffic), may all be routed through the switch (SW 44) similarly and be oriented toward the proper transmit switch interface adapter X_SIA (47 or 49). The interface transmits the switch cells to the transmit adapter through a FIFO buffering which absorbs data bursts.

The transmit switch interface adapter X_SIA (47, 49) may either operate in VL mode when it is connected to a TPA (48), or in ATM mode when it is connected to an ATM adapter (50). Both modes may include both ATM traffic and VL traffic. Both modes are described hereunder. One bit position in the header control field CNTL enables discriminating between ATM and VL (i.e. VL) traffics. However, one should notice that in the case of a transmit adapter attached to an ATM outpu trunk (i. e. for X_ATM 50), any reassembled VL packet should be re-segmented and processed into ATM-like packets prior to being fed into said ATM output trunk.

In VL mode, (as well as in ATM mode), the switch interface X_SIA implements cell validity checking and packet reassembly operations. The validity checking consists in computing the CRC-8 of the received ATM cell and comparing this computed value to the CRC-8 carried by the cell. If both values match, no error was introduced by the switch. Otherwise, the cell is simply dropped. Once the cell has been checked valid, its control byte bit 1 is checked for determining whether it should be directly passed to the transmit PTA (X_PTA 48) or be submitted to the reconstruction of the original VL packet. For each packet under reassembly operation, the transmit processor has stored the ATM cell header which had been used for the switching of all the cells.

Let's now consider the operations including : packet reassembly, routing and finally queuing and thresholding. As per the packet reassembly operation, which is processed in the specialized processor of the transmit TPA, it is meant to recombine the split VL packets into their original form. Multi-user reassembly requires saving and restoring intermediate results like byte alignment parameters, partial CRC-32 as explained below, etc... These data are stored in the special processor local (X_P3) store and passed to the X_SIA at appropriate time, or entirely operated in the special processor. A cell reassembly table and buffer governs the process. It is addressed by a portion of the AH field of the incoming cell, and contains, for each user, information on data alignment of the last word, pointer, status and buffer chaining.

The reassembling is implemented in two steps : at break-in time, the special processor (X_P3) of the X_TPA uses some information in the table to reassemble the cells for each user into buffers ; while in background process, chaining information is used to chain all buffers containing data of the same packet and for the same user.

More particularly, a 2-bytes long portion of the first cell AH is used as a pointer which addresses a file of control blocks in the local memory of, say, the special processor which returns a "partial" 4-bytes long (i.e. CRC-32) and a queue pointer where the 48 payload bits of the considered cell shall be stored (together with the header). When the next cell belonging to the same VL packet is received, the pointer enables again getting the partial CRC-32 and the queue pointer. The CRC-32 is updated using a conventional CRC generating algorithm for updating the last partial CRC with the current payload. The queue pointer is used for payload concatenation. When the last packet is received and processed, the CRC-32 should be completed and the whole VL packet be reassembled. It may then be validity checked.

Once the VL packet has been reassembled in the buffer store, the specialized processor X_P3 in X_TPA (48) decodes the CB1 byte to determine the routing mode and corresponding dispatching. If the routing mode involves label swapping, the processor extracts the L2 label from the ATM header, stores it into a VL routing field of the header, and updates the header control word.

ATM traffic is discriminated thanks to the control byte. Then, the X_TPA transforms the ATM cell into a VL type packet by inserting a specific 4-bit pattern in the four first bits of the ATM cell. This field is called the Generic Flow Control (GFC) field and is defined by the ATM Standard Bodies as being available within the network (the standard specifies that this field is used at the User to Network Interface (UNI)). Decoding of the four first bits of the VL packet at the R_TPA can further indicate whether this packet is a true VL packet or a native ATM packet. The X_TPA then computes accordingly the HEC which is stored in the header field of the ATM cell.

If the transmit TPA (X_TPA) handles several output links, then additional routing operations are implemented for all routing modes. They are basically the same as those implemented in the receive TPA adapter.

As per the network control packets, they are detected the same way as at the Receive_TPA and, if required, they are transmitted to the General Purpose Porcessor (GPP) assigned with network control processing operations.

Finally, prior to being passed to the output line or trunk, the traffic needs being submitted to multiple class queuing (see, for instance, the above referenced European Application "Method for Operating Traffic Congestion Control in a Data Communication Network and System for Implementing said Method"), and thresholding operations made to comply with each user's reserved bandwidth. The informations derived therefrom are used for monitoring the node output traffic.

To complete the description of the optimized multipurpose node architecture (see figure 4), one should now consider the Receive ATM and Transmit ATM adapters, bearing in mind that, not only, R_SIA and X_SIA functions are basically the same for both VL trunks and ATM trunks, but they might also be combined into a same unit, respectively, for both trunks. Also, the unit might be simplified when only ATM or VL trunks reach or leave the considered unit.

The following functions are implemented in the receive ATM adapter : HEC checking, traffic discrimination and routing.

HEC checking is a conventional validity control operation involving HEC computation, matching against the incoming HEC, and in case of mismatch, discarding the corresponding cell.

Traffic discrimination is made to distinguish between data traffic and network control and management traffic, and for routing both traffics properly. The network control and management cells are oriented toward a general purpose processor (GPP) attached to the receive ATM adapter.

The X_ATM adapter shall be made to capture and reassemble only control packets, if any, in the associated general purpose processor. Also, as already mentioned, any reassembled VL packet should be resegmented into ATM-like packets for being fed into the ATM output trunk or line attached to said X_ATM(50).

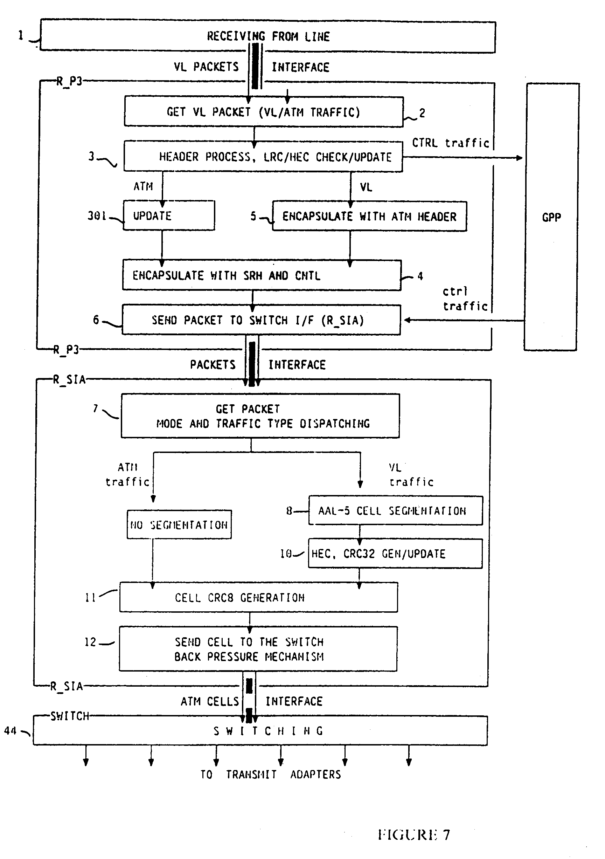

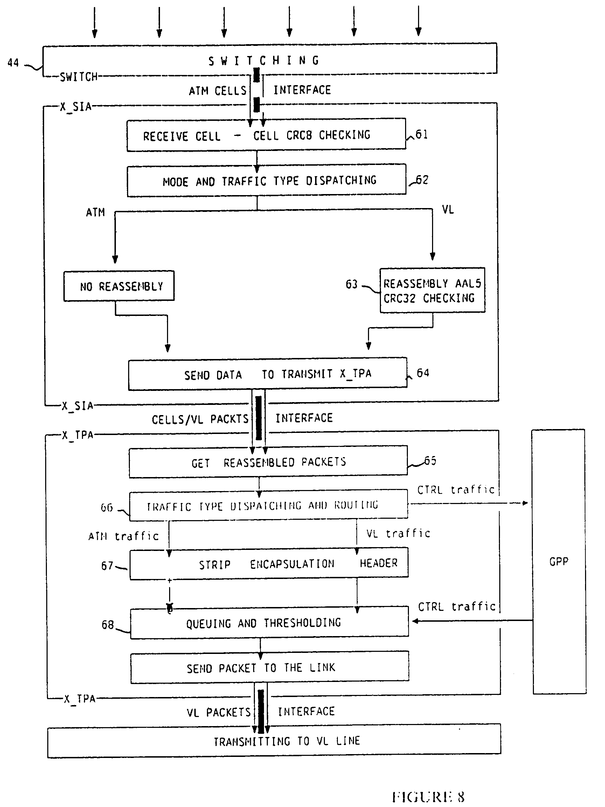

The above described, general receive and transmit data flows have been summarized in figure 7 and figure 8 respectively. Given those flow-charts and the above detailed description, a programmer shall have no difficulty in deriving the adequat programming code, therefrom, which code, in combination with the hardware as described herein and detailed in the above cited copending Applications, shall implement the multipurpose node function.

The flowchart of figure 7 represents the general receive data flow implementing the function of R_TPA (41) and R_SIA (43, 46). It starts with receiving the variable length traffic (possibly including ATM packets) from the line (steps 1 and 2). Then the header is processed (step 3), i. e. for integrity checking through conventional LRC checking (or HEC if ATM) and header updating as already explained in the above description. The header processing also enables detecting VL control traffic to be oriented toward the general purpose processor (GPP) for being processed therein through CB1/CB2. Should the control traffic not be destinated to the considered node, or should it also need being forwarded through the network, the control data from the general purpose processor shall be reinserted into the data flow and down to the switch.

Step 3 also involves discriminating between ATM traffic and VL traffic, based on the four bits GFC (i.e. the four first bits of CB1). The ATM traffic is routed (see label swapping operation on ATM traffic in figure 6), while the ATM header is being updated (step 301) through the ATM connection look-up operation (see figure 6) and "encapsulated" with the calculated SRH and CNTL bytes (step 4). Otherwize the considered packet is a variable length packet. The so-called "ATM header" is generated through the process involving label swapping and VL connection table look-up, and used to "encapsulate" the considered packet (step 5). The VL connection table look-up is also operated at step 4 (see also figure 5) to provide the SRH and CNTL data used in the VL packet encapsulation process. In the preferred embodiment of the invention, the above operations are all performed in the special processor of the R_TPA, which may then send the processed packet to the receive switch interface (R_SIA) (step 6). The R_SIA interface gets therefore encapsulated ATM and/or VL packets (step 7) and dispatches the traffic according to its mode. Should the considered packet be an ATM packet belonging to operation on either ATM mode or on VL mode (i. e. a packet being designated by the expression ATM-like packet), it is processed as an ATM packet. As per a variable length (VL) packet, within VL traffic, it is "segmented", (i. e. broken) into ATM-like packets (step 8). As already mentioned, this is performed by segmenting the VL payload into 48 bytes long blocks (or segments) and attaching to each segment the VL packet header plus an HEC computed from the AH field content. The HEC is generated according to ATM specifications (steps 8 and 10) in the preferred embodiment of the invention, the HEC is modified for the last segmentation, which last segment shall be identified by a preassigned bit of the AH header. The 4 bytes long CRC-32 is computed and stored for being appended to the last segment of the considered VL packet and for deriving therefrom the last ATM-like packet. For each ATM packet derived from the segmentation operation (i. e. ATM-like packet), or from ATM traffic, the one byte long control word (CRC-8) is also generated at step 11, and appended to the considered cell.

Every such organized cell may then be forwarded to the switch (step 12), without distinction between cells, except in the case of switch saturation, in which case a so-called backpressure mechanism is triggered. The detailed description of such a mechanism is not necessary for the present invention and therefore shall not be described further herein. One needs only understand that this mechanism shall help handling switch overload conditions. However, for some precisions on this mechanism one may refer to the above mentioned copending European Application on a "Method for Operating Traffic Congestion Control in a Data Communication Network and System for Implementing said Method".

Now, one shall appreciate again, how the judicious architecture of the multipurpose node (as represented in figure 4), do facilitate the post-switch processing as well as it did for the pre-switch processing (as described above), and perform the invention objectives in an optimal way.

The flow-chart of the transmit switch interface adapter (X_SIA) and transmit trunk/port adapter operations described above are summarized into the general transmit data flow of figure 8. In the X_SIA, the cells provided by the switch are first checked for validity (step 61) through the CRC-8 which should then be dropped. Non valid cells are discarded while valid ones are forwarded for dispatching (step 62) based on mode and traffic to be considered. As already mentioned a specific bit of the cell control byte indicates whether the cell should be passed directly (no reassembly) or further processed for reassembling operations (step 63). In the latter operational step, the cells are reassembled into their original packet, along with validity checking for the whole VL packet through the CRC-32 building-up from the cells belonging to the same packet. Briefly stated, let's remind that, starting with the 48-bytes long payload of first segment, CRC-32 computation is started. It is stored as a partial CRC in a local memory control block addressed by a pointer derived from AH header. This partial CRC is then updated with all intermediate payloads of same VL packet, down to the last, and then compared with the CRC-32 stored in that last cell for validity check of the whole VL packet processed.

Recombined packets are then passed to the X_TPA special processor (step 64, 65). The incoming packets are then analyzed and dispatched (step 66). Said dispatching includes: forwarding control traffic to a general purpose processor (GPP) which may further forward the information to the output line via queuing and thresholding operations (step 68). As per non-control traffic, it is also sent to queuing and thresholding (step 68) after being first stripped from encapsulation header (step 67).

The packets are queued, possibly into several queues in case of multiple class queuing, e. g. based on priority criteria depending on the type of traffic involved. And thresholding operations may be performed in step 68 to comply with each user's reserved bandwidth. This criteria has been used to optimize the network operation, bearing in mind that each user may apply for a predefined bandwidth depending on its expected traffic load.

In order to complete the invention node description, one should now describe the R_ATM (45) and X_ATM (50) made to be attached to ATM trunks.

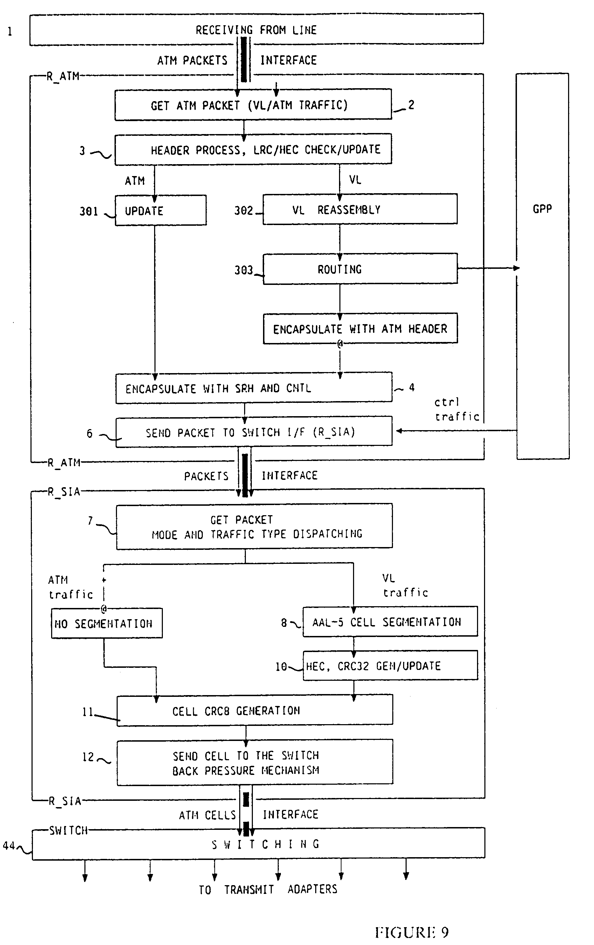

Figure 9 represents the operating flow chart of the R_ATM (45). Some of the involved steps do operate exactly as they did in the R_TPA (41 in figure 4) and they have accordingly been labeled with the same references they have been given in figure 7. The only important difference lies with the requirement for reassembling the received ATM-like packets into their original VL form (step 302) for being routed toward the General Purpose Processor (step 303), prior to being encapsulated with an ATM header (step 5). Control traffic is differiated from data traffic based on the CB1/CB2 field contents. This last operation is performed in the routing of step 303.

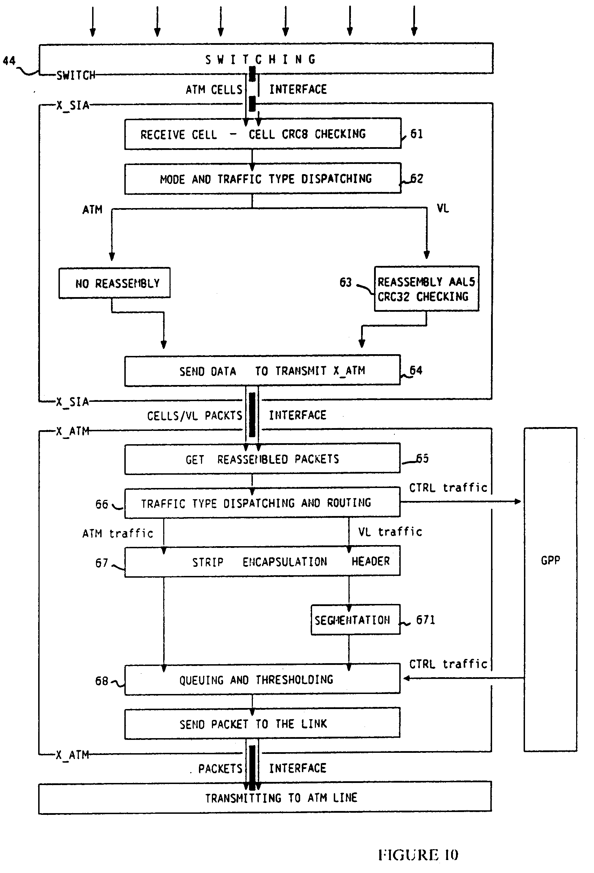

Figure 10 represents the flow chart of the X_ATM (50) operation. Here again, most operations are similar to those performed in the X_TPA (48) described above with reference to figure 8 and have been labeled accordingly. The only differences, are due to the fact that ATM cells derived from VL packets might have been reassembled in the X_SIA (49). Therefore, prior to being fed on the output ATM trunk, these need being re-segmented, and get an ATM header in order to provide ATM-like packets (step 671) transmissible over an ATM output trunk.

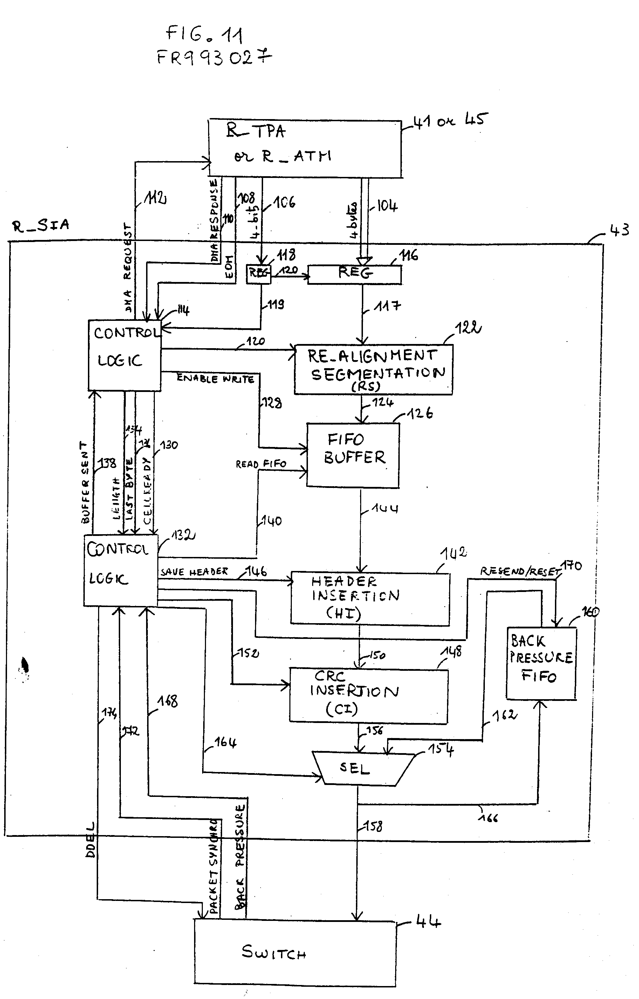

FIG.11 describes a physical implementation of the R_SIA boxes 43 or 46 of FIG.4 when interfacing the R_TPA box 41 or the R_ATM box 45. As mentionned , the traffic to be processed by the R_SIA box if sent by the R_TPA box 43, is composed of variable length packets and the traffic sent by the R_ATM box 45 is composed of fixed length packets based on ATM cells. The information upon the type of traffic is provided in stream in the header of the packet. The R_TPA box 43 and the R_ATM box 45 mainly comprise a memory and a microprocessor MP with its own internal clock. The DMA interface between the R_TPA or the R_ATM memory and the R_SIA boxes comprises a 4 bytes data bus 104 for providing the data read from the R_TPA or the R_ATM memory through DMA access, a four bits companion bus 106 where each bit is related to one byte in bus 104: a byte sent on bus 104 has to be processed by the R_SIA box if the corresponding BYTE SELECT bit in bus 106 is on. The interface further comprises one bit EOM line 108 conveying a bit set ON by R_TPA box 41 or the R_ATM box 45 when the bus 104 conveys the last byte of the message being currently processed; furthermore two lines DMA REQUEST 112 and DMA RESPONSE 110 control the DMA access.
In the R_SIA box a control logic 114 activates the DATA REQUEST signal on line 112 to the R_TPA box 41 or the R_ATM box 45 which sets the DMA RESPONSE signal on line 110 and sends the data on buses 104, 106 and possibly 108 in the same MP clock cycle.
The data bytes sent on bus 104 and the BYTE SELECT bit on bus 106 are stored in registers 116 and 118 respectively. The BYTE SELECT bits are provided from register 118 to control logic 114 on line 119 which generates therefrom a realignment/segmentation command on line 120 towards a REALIGNMENT and SEGMENTATION (RS) box 122; this RS box is composed of multiplexors and registers. Data are read from data register 116 and provided to RS box 122 on line 117. This box provides in a four bytes output bus 124 data realigned on a word boundary and grouped to form the future cells payloads. Data sent by RS box 122 over bus 124 are four bytes words except the last word of the cell payload which may contain less than four valid bytes. When the packets to be processed by the R-SIA box are fixed length ATM cell based packets, instead of issuing a realignment/segmentation command, the control logic 114 sends a realignment command to the RS box 122: upon reception of this command the RS box 122 realigns the 4 bytes words before sending the data to the FIFO buffer without a segmenting operation (one packet for one cell).
Data from RS box are written into a FIFO buffer 126 under control of an ENABLE WRITE signal on line 128 provided by control logic 114 towards the FIFO buffer 126 and at the rate of MP clock. The FIFO buffer 126 is organized in two pipelined buffers of 57 bytes each: the RS box fills the first buffer until a complete cell data payload is stored; control logic 114 then sends a new ENABLE WRITE signal on line 128 towards the FIFO buffer 126 and simultaneously sends a CELL READY signal on line 130, a BUFFER LENGTH (6 bits) signal 134 and a LAST BYTE signal 136 if the FIFO buffer ready to be sent contains the last byte of the initial packet to be switched, to a control logic 132. In response to the new ENABLE WRITE signal the FIFO buffer 126 will restart receiving realigned data in its second buffer until a new data payload is ready. This simultaneous filling of the second buffer will insure that cells can be continuously transmitted to the switch without any dead time. The RS box 122, the control logic 114 and the WRITE FIFO buffer part of the FIFO buffer are following the clock cycles of the MP internal clock.
The control logic 132 controlling the following process of cell preparation will send back on line 138 a BUFFER SENT signal to control logic 114 when a current buffer filled with a cell payload has been processed. This BUFFER SENT signal will gate the CELL READY signal 130 sent by control logic 114: the transition active-disable of CELL READY signal 130 resets the BUFFER SENT signal on line 138; the transition active-disable of BUFFER SENT signal 138 is used by control logic 114 to update an internal register which provides the CELL READY signal 130.
The control logic 132 sends on a line 140 a READ FIFO signal which is received by the FIFO buffer. When receiving the READ FIFO buffer, the buffer which is ready is sent on a line 144 to a HEADER INSERTION (HI) box 142. The control logic 132, the reading part of the FIFO buffer 126 and the HI box 142 are following the same cycle of the internal clock of switch 44. The HI box 144 reads the 4 bytes words sent by the FIFO buffer 126 containing a cell payload and builds the corresponding cell by adding a 9 bytes header to each cell payload sent by the FIFO buffer 126 and read in the first cell payload of a packet. The 9 bytes header is saved by the HI box 142 upon reception of the SAVE HEADER command 146 that the control logic 132 sends on line 146 at each beginning of packet transmission. In the case where the packets to be processed by the R_SIA box are fixed length ATM cells based packets, the control logic 142 instead of sending a SAVE HEADER command, sends a NO HEADER command to the HI box 142 on the line 146. Upon reception of this command, the HI box 142 does not save neither insert packet header and let the one cell packet transparently crossing the box.
The HI box 146 further splits the incoming 32 bits plus header into 8 bits words and send them to a CRC INSERTION (CI) box 148 on a line 150. The CI box 148 computes the ATM CRC-32, the packet length and a CRC-8 field for each cell. Upon reception of an INSERT command sent on line 152 by the control logic 132 to the CI box 148, the CRC-8 code is added to any cell and two control bytes, the length of packet and ATM CRC-32 code are inserted at the end of the last cell of the packet. The data is then sent byte per byte on the line 150. In the case where the packets to be processed by the R_SIA box are fixed length ATM cells based packets, the control logic 142 instead of sending an INSERT command, sends a CRC ONLY command to the CI box 146 on the line 152. Upon reception of this command, the CI box 146 only computes and insert the CRC-8 before sending the data on line 156.
The selector box (SEL) 154 which is a multiplexor sends on line 158, either the data sent to it by the CI box 148 on line 156 or the data sent by a BACK PRESSURE FIFO buffer (BP) 160 on line 162 depending on the reception of a SELECT BP signal or not sent by the control logic 132 on line 164 to the SEL box 154.
The data sent by the SEL box 154 to the switch 44 is also sent on line 166 to the BP FIFO buffer 160. This box receives and saves the data until the end of the cell (58 bytes) and reset it at the end of the cell upon reception of a RESET signal sent by control logic 132 to the BP box on the line 170, except if a BACK PRESSURE signal is sent by the switch 44 on line 168 to control logic 132 which then sends to the BP box 160 a RESEND signal on line 170. Upon reception of RESEND signal, the BP FIFO buffer 160 re-sends on line 162 the cell stored to the SEL box 154. As for the control logic 132, the reading part of the FIFO buffer 126 and the HI box 142, the CI, SEL and BP boxes are running with the same clock signal from the switch 44.
The control logic 132 starts transmission of cells on reception of two contiguous PACKET SYNCHRO signals on line 172 sent by the switch 44 at fifty-eight cycles interval (one cell time). The objective is to insert cell transmission in the continuous stream of cell time slots provided by the PACKET SYNCHRO signals sent by the switch at 58 cycles interval. Cells transmission is halted when two contiguous PACKET SYNCHRO signals at 58 cycles interval tare missing. A data delimiter (DDEL) signal is sent on line 174 by the control logic 132 to the switch 44 at each beginning of a new cell transmitted on line 158 by the SEL box 154. The DDEL signal set ON advises the switch there is a cell to process.

The man skilled in the considered data communication art shall appreciate, from the above description, the usefulness of such a designed communication node. He shall also understand that the above described node may support various modifications, like, for instance, simplifications of the design for supporting simple and unique input and/or output trunks only.

## Claims

1. A multipurpose packet switching node for a data communication network made to vehiculate traffic including both data packets and network control packets, said traffic being either in Variable Length (VL) mode, with said VL mode carrying so-called VL packets with each said VL packet including a variable length payload and/or Asynchronous Transfer Mode (ATM) packets with each packet carrying a fixed length header and a fixed length payload, or be in ATM mode carrying ATM packets possibly including segmented VL packets (herein designated as ATM-like packets), said network node including at least one receive adapter means connected to VL and/or ATM input trunks, at least one transmit adapter means connected to VL and/or ATM output trunks, and an ATM type switching device made for switching so-called ATM cells and for interconnecting said input and output trunks in any possible combinations of input versus output trunk connections through said receive and transmit adapters, said multipurpose node being characterized in that :
the receive adapter means include :
- first checking/updating and dispatching means for checking any received packet validity, for discriminating ATM and ATM-like packets from VL packets, and for dispatching said packets accordingly;
- means sensitive to an ATM packet for updating its ATM header;
- reassembling means sensitive to an ATM-like packet derived from a segmented VL packet for reassembling said segmented packet into a VL packet;
- first encapsulating means sensitive to a VL packet for generating a so-called ATM header and for encapsulating said received VL packet with said ATM header ;
- second encapsulating means for generating a switch routing header (SHR) and a control header (CNTL) and for encapsulating the received packet being it an ATM packet or an ATM header encapsulated VL packet, with said SRH and said CNTL information;
- segmenting means sensitive to an encapsulated VL packet for segmenting said VL packet payload into ATM like payload segments and for appending each said payload segments with said SRH, CNTL and ATM header used for said second encapsulation operation of the processed VL packet, whereby "ATM like" packets are being generated;
- means for generating a so-called cell control word (CRC-8) for each ATM updated packet and each ATM like packet derived from said VL segmentation means, and for appending said CRC-8 to each said ATM or ATM like packets, whereby so-called ATM cells are being generated for being properly switched through said switching device ; and,
the transmit adapter means include :
- checking means for receiving each ATM cell provided by the switching device, checking each cell validity and stripping the corresponding cell control word;
- dispatching means fed by said checking means for separating ATM packets from ATM-like packets;
- reassembling means sensitive to said ATM-like packets for reassembling a VL packet, checking its validity, and stripping the switch routing header and control CNTL therefrom; whereby said VL packet could be fed into a VL output trunk, or be otherwise resegmented and be assigned an ATM header for being fed into an ATM output trunk;
- means sensitive to an ATM packet provided by said dispatching means , stripping the encapsulating switch routing and control headers therefrom, whereby deriving an ATM packet capable of being fed into an ATM or a VL output trunk.

2. A multipurpose packet switching node according to claim 1, wherein said fist check/update and dispatch means in the receive adapter is made to include:
- means for dicriminating a packet including network control data from a packet including network user's data;
- means for orienting said discriminated network control packet toward a so-called general purpose processor for processing said network control packet and deriving network control data therefrom;
- means for identifying said network control data and, should it be intended for controlling the considered node, processing it therein, and/or should it need being forwarded to another node, reinserting same into the node output traffic, with possibly reconstructing the original network control packet from ATM-like packets in case of network control being operated in VL mode.

3. A multipurpose packet switching node according to claim 1 or 2 wherein said receive adapter further includes a so-called back-pressure mechanism sensitive to a switch device generated signal indicating a switch overload to control the switch feeding rate through said receive adapter means.

4. A multipurpose packet switching node according to claim 1, 2 or 3, wherein said transmit adapter further includes a so-called thresholding mechanism, sensitive traffic congestion indications based on traffic thresholds defined for each network user for thresholding traffics in the queuing device whereby the node output traffics are being monitored.

5. A multipurpose packet switching node according to claim 4 wherein said ATM packet includes a 5 bytes long ATM header and a 48 bytes long data field (payload), whereby said second encapsulating means, include :
- a prestored ATM connection table mapping each assigned 5 bytes long header with a 4 bytes long header including a switch routing header (SHR) and a control data (CNTL);
- means for addressing said prestored ATM connection table with the current ATM packet header for reading out a new assigned ATM packet header and corresponding SRH and CNTL fields ;
- means sensitive to said ATM connection table addressing for swapping the ATM packet headers and encapsulating the header swapped packet with said SRH and CNTL field contents ;
whereby the so-called ATM cell is generated, but for the cell control field CRC-8.

6. A multipurpose packet switching node according to claim 4 wherein said VL packet include a routing label (L1) within a variable length payload, said L1 label being used to address a prestored VL connection table, which returns a new routing label (L2) label, a switch routing header (SRH) ; control data (CNTL) ; and a network header (AH) ;
said node including :
- means for swapping L1 with L2 ;
- means for attaching SRH, CNTL and AH to the VL payload.

7. A multipurpose packet switching node according to claim 6, wherein said first and second encapsulating means and said segmenting include :
- splitting the VL payload into fixed length segments ;
- appending each said segment to a header including said SRH, CNTL and AH data, together with a Header Error Correction (HEC) derived from AH through a predefined logical function ;
whereby said ATM cell is generated, but for the control CRC-8 to be generated and appended therein.

8. A multipurpose packet switching node according to claim 7 wherein said AH value includes one predefined bit assigned to identifying the ATM cell including the last segment provided by a current processed VL packet payload, said node being then made to include means for updating the corresponding HEC accordingly.

9. A multipurpose packet switching node according to claim 8 characterized in that the ATM cell including the last payload segment is also provided with a control block (CRC-32) derived from the whole payload.

10. A multipurpose packet switching node according to claim 9 and wherein said reassembling means includes :
- means for detecting the first ATM cell belonging to a VL packet, dropping the cell control word therefrom ;
- means for detecting subsequent intermediate ATM cells belonging to the VL packet, extracting the payload segment therefrom and appending it to the cell control word stripped ATM cell, whereby VL packet reassembling is being processed ;
- means for detecting last ATM cell of same VL packet, appending the corresponding payload segment to the VL packet being reassembled and isolating the packet control word (CRC-32) appended to said last ATM cell ;
- means for checking the reassembled VL packet validity using said CRC-32 word.

11. A multipurpose packet switching node according to claim 10 wherein said reassembled Vl packet validity check means includes :
- means for starting CRC-32 generation with said first VL segment and storing a partial CRC-32 derived therefrom, and,
- means for updating said partial CRC-32 down to the last segment belonging to same VL packet.

12. A multipurpose packet switching node according to anyone of claims 1 through 11 wherein the payload of a reassembled VL packet in the transmit adapter is resegmented into fixed length payload ATM-like segments, each said segments being then provided with an ATM header, whereby ATM-like packets are generated for being fed into an ATM output trunk.

13. The segmenting means included in the receive adapter of anyone of claims 1 to 12, characterized in that it comprises:
a first buffering means (FIFO 126) having a two-cell sized storing capacity receiving the VL packets, under control of a clock signal internal to the receive adapter means and assembling them into ATM cells;
reading control means for sending said assembled cells to the ATM type switching device under control of a clock signal internal to said ATM type switching device.

14. The segmenting means of claim 13 further comprising:
a second buffering means (160) for saving each cell read from the first buffering means and
means (154, 132) for sending said saved cell to the ATM type switching device in case where a busy condition is provided by the ATM type switching device.
